# EUROPEAN PATENT APPLICATION

(11) **EP 3 797 601 A1**
(43) Date of publication of application: **31.03.2021**
(21) Application number: 19199285.8
(22) Date of filing: 24.09.2019
(51) Int. Cl.: A23L 29/212, C08B 1/00, C08B 30/00, C08L 3/00

(54) **PROCESS FOR THE PREPARATION OF PREGELATINIZED STARCH AND/OR PREGELATINIZED FLOUR AND PREGELATINIZED STARCH AND/OR PREGELATINIZED FLOUR OBTAINABLE FROM SAID PROCESS**

(71) Applicant: Beneo, Remy, 3018 Leuven-Wijgmaal (BE)
(72) Inventor: The designation of the inventor has not yet been filed
(74) Representative: Koster, Nico

(57) **Abstract**

Process is provided for the preparation of pregelatinized starch and/or pregelatinized flour, comprising the steps of: providing an aqueous medium having a pH in the range of -1.0 to 7.5; mixing starch and/or flour with the aqueous medium to form a starch composition having a pH in the range of 2.0 to 7.9, wherein the starch composition has the aqueous medium as continuous phase and contains between 5 and 60 wt.%, expressed as percentage of dry matter on total weight of the starch composition, of particles of starch and/or flour; and pregelatinizing the starch composition, wherein said composition is heated using a drum dryer to form the pregelatinized starch and/or pregelatinized flour; wherein during the heating the starch composition is dried using the drum dryer.

## Description

### Field of Invention

The field of the invention relates to a process for the preparation of pregelatinized starch and/or pregelatinized flour. The field of the invention further relates to a pregelatinized starch and/or pregelatinized flour obtainable according to the process according to the invention.

### Background

Starches and/or flours are widely used in the food manufacturing industry for processing, and as food thickeners or stabilizers. Processes for pregelatinizing starch and/or flour are generally known. Native starch granules are insoluble in cold water. When native granules are dispersed in water and cooked, they become hydrated and swell. The pregelatinized starch and/or pregelatinized flour is dried before being packed and transported. Pregelatinized starch and/or flour may readily be dissolved in cold water.

Pregelatinized starch and/or flour may be derived from native starch and/or flour, from chemically crosslinked starch and/or flour, and from physically modified starch and/or flour. The term physically modified starch and/or flour includes starches and/or flours that have been subjected to a heat/moisture treatment, to annealing, to thermal inhibition, and the like. As meant herein the term physically modified does not encompass pregelatinization.

Chemically modified and physically modified starches and/or flours are known to provide a high process tolerance, which makes them suitable as food thickeners or stabilizers under more extreme process conditions.

However, it has been found that known pregelatinized starches and/or flours may lose some or all of their beneficial high viscosity properties when a gel prepared from said pregelatinized starch or flour has been subjected to a high level of shear. Such a high level shear process may, for example, occur during preparation of food products.

### Summary

Therefore, there is still a need for an improved process for the preparation of pregelatinized starch and/or pregelatinized flour.

There is also a need for improved pregelatinized starches and/or pregelatinized flours.

According to a first aspect of the invention there is provided a process for the preparation of pregelatinized starch and/or pregelatinized flour, comprising the steps of:
- Providing an aqueous medium having a pH in the range of -1.0 to 7.5, preferably 1.0 - 5.0;
- Mixing starch and/or flour with the aqueous medium in a mixing step to form a starch composition having a pH in the range of 2.0 to 7.9, preferably between 4.0 and 7.5, more preferably between 4.0 and 6.5, wherein the starch composition has the aqueous medium as continuous phase and contains between 20 and 60 wt.%, preferably between 30 and 50 wt.%, expressed as percentage of dry matter on total weight of the starch composition, of particles of starch and/or flour; and
- Pregelatinizing the starch composition in a pregelatinization step, wherein said composition is heated using a drum dryer to form the pregelatinized starch and/or pregelatinized flour; wherein during the pregelatinization step the starch composition is dried using the drum dryer.

According to another aspect of the invention there is provided a physically modified and pregelatinized starch and/or flour obtainable according to the process according to the invention, which the starch or flour preferably is a rice starch and/or rice flour.

According to another aspect of the invention there is provided a pregelatinized rice starch and/or pregelatinized rice flour, wherein the pregelatinized rice starch and/or pregelatinized rice flour is physically modified, characterized by a tan δ value of at most 0.99, wherein said tan δ value is measured on a gel with pH 3.6 obtained from said starch and/or flour, that was subjected to consecutive mixing steps at room temperature of 8 minutes at 1200 rpm, 5 minutes at 900 rpm and 5 minutes at 300 rpm, and a shear rate application step during 1 minute at between 3000 and 9000, preferably at 5000 rpm, wherein said tan δ is measured using an amplitude sweep at deformation from 0.01% to 1000% at frequency 1 Hz.

It has been found by the inventors in the investigations leading to the present invention that when mixing the starch and/or flour with the aqueous medium to form a starch composition the pH of the resulting starch composition is important for obtaining a pregelatinized starch and/or pregelatinized flour having improved properties such as for example a high shear stability. The pH of the starch composition is controlled to be in the range of 2.0 to 7.9. It has surprisingly be found that, when the pH of the - aqueous - starch composition is controlled to be in the range of 2.0 to 7.9 before pregelatinizing the starch composition, the gels and other compositions comprising the resulting pregelatinized starch and/or pregelatinized flour can have improved properties such as for example enhanced high shear stability. This can enable a reduction in the amount of pregelatinized starch and/or pregelatinized flour to achieve a predefined viscosity.

In a preferred embodiment the pH of the starch composition is chosen to be lower than the pH of the starch and/or flour used. Such pH is dependent on the type of starch. For thermally inhibited starches such pH can be alkaline, for instance above 8.0. For native starches, the pH of the starch and/or flour is typically in the range of 5-7. For chemically modified starches, the pH will depend on the chemical modification. The pH may further depend on the type of starch, as well as process conditions of the inhibition or modification. Thus, more particularly, the pH will be at most 7.9 for thermally inhibited starches.

In the mixing step of the invention, the starch and/or flour is mixed with an aqueous medium to form a starch composition, which is an -aqueous- starch composition. The term starch composition as meant herein has the meaning of a composition comprising at least one a starch and/or flour.

The term -aqueous- starch composition as meant herein has the meaning of a slurry having an aqueous liquid as continuous phase and containing solid particles of starch and / or flour. Typically, the -aqueous- starch composition is able to flow and being transported in similar fashion as a liquid when being at a temperature between 5°C and 55°C. Such starch composition can be subjected to one or more drying steps, as a consequence of which the aqueous starch composition becomes a dried starch composition.

The maximum weight percentage of solid particles that can be comprised in the starch composition while still maintaining the characteristics of flowability and transportability will - as is known - depend on the precise nature of the particles. It is preferred that the solids content of the -aqueous- starch composition lies between 20 and 60 wt.%, between 25 and 55 wt.%, between 30 and 50 wt.%, more preferably between 35 and 45 or 40 wt.%.

The aqueous medium may have additional constituents in addition to water. Other compounds besides water may be present, and indeed will be in case of for example an industrial application of the invention where use is made of process water or other on-site available and suitable water streams. It is however preferred that the aqueous phase is essentially free, preferably free of other solvents such as ethanol. The aqueous phase preferably contains at least 80, 85, 90, or even at least 95, 96, 97, or 98 wt.% water. In an embodiment of the invention, the aqueous phase consists essentially of water, or even consists of water.

The temperature of the aqueous phase can vary within a wide range, and is preferably between 5 and 50°C, more preferably between 10 and 30°C or even between 15 and 25°C.

In the pregelatinizing step the starch composition is heated using a drum dryer to form the pregelatinized starch and/or pregelatinized flour. During the pregelatinization step the starch composition is dried using the drum dryer. Drum dryers are as such known to the person skilled in the art; furthermore it is also known that pregelatinization as well as drying can occur both during one pass on the drum dryer. It has been found by the inventors that using the drum dryer in combination with the other features of the present invention to form the pregelatinized starch and/or pregelatinized flour, the resulting pregelatinized starch and/or pregelatinized flour may show improved properties such as for example a relatively high initial cold viscosity and an enhanced high shear stability.

Principally, the starch and/or flour used may be any type of starch. In one embodiment, the starch is physically modified, preferably thermally inhibited. In alternative embodiments the starch and/or flour is selected from the group consisting of a native starch and/or flour or a chemically modified starch and/or flour. The term "native" starch as meant herein has the meaning of a starch as it is found in nature. Chemically modified starch and/or flour can be obtained via for example chemical crosslinking. Chemical crosslinking processes of starch and/or flour are known in the state of the art.

Most preferably, the starch and/or flour is derived from a waxy starch and/or waxy flour. It has been found that waxy variants of starch and/or flour can provide beneficial properties.

In a preferred embodiment, the starch and/or flour is derived from rice, preferably a waxy rice.

In an embodiment, the process comprises a thermal inhibition process prior to the mixing step and the starch and/or flour used in the mixing step is the thermal inhibited starch and / or thermally inhibited flour. When a thermally inhibited starch or flour is mixed with water, the pH of the resulting - aqueous- starch composition often lies higher than 7.0 or 8.0. The tendency towards having a alkaline pH of the - aqueous- starch composition is assumed to be caused by the thermal inhibition process conditions for thermally inhibiting the starch or flour; i.e. using high temperature (such temperatures lying between 100 and 200°C) and alkaline pH conditions. It was discovered by the inventors that the changes to the starch and/or flour as achieved by thermal inhibition can be at least partially undone if the pH of the said aqueous starch composition is not lowered according to the invention.

The preparation of thermally inhibited starch and/or of thermally inhibited flour is as such known. Thermally inhibited starch and thermally inhibited flour have as an advantage that they are generally not regarded as chemically modified starch or chemically modified flour, do not need to be labelled with a European Union 'E' number or equivalent, and can thus be part of a 'clean label' approach to food product ingredients.

As is known, thermal inhibition of starch comprises a heat treatment at temperatures lying between 100 and 200°C. In a preferred embodiment the thermal inhibition is executed at an alkaline pH - at a pH above 8.0 - whereby it is ensured that the starch has a moisture content below 1 wt.%. Consequently, upon completion of the thermal inhibition the moisture content of the thermally inhibited starch may be, and in a preferred embodiment is, below 1 wt.%.

As is known, thermal inhibition of flour comprises a heat treatment at temperatures lying between 100 and 200°C.

Upon having been initially prepared, thermally inhibited starch and thermally inhibited flour have a moisture content below their equilibrium value, typically significantly below their equilibrium value. As meant herein, the equilibrium moisture content is the value at 21°C and 50 % relative humidity.

In one preferred embodiment, the required pH of the -aqueous- starch composition is achieved by providing an acidic aqueous medium, prior to it entering the mixing step. The pH of the aqueous medium is for instance chosen in the range between -1.0 and 7.5 or between 1.0 and 5.0. The desired pH value of the aqueous medium can be established via routine experimentation using a small sample of the starch and/or flour concerned. Most preferably, the pH of the aqueous medium is determined such that no further pH adjustment is necessary. In case of a thermally inhibited starch and/or thermally inhibited flour having a significant alkalinity it can prove to be necessary that the pH of the aqueous medium is brought to a value lower than 2.0.

However, in a further embodiment the pH of the starch composition is brought to a desired value subsequent to the bringing together of the aqueous medium and the starch and/or flour. In this embodiment the pH of the aqueous medium can be between -1.0 and 10.0, and in the mixing step the pH of the starch composition is brought to a value between 3.0 and 7.0 or to a value between 4.0 and 6.7 within 90 minutes, preferably within 60 or 30 or 15 minutes, more preferably within 10 minutes after the mixing of the starch and/or flour with the aqueous medium.

In general it is quite possible and sometimes preferred that an acidic aqueous composition is added to the starch and/or flour or to the starch composition in order to further adjust and optimise towards desired values.

Adjustments of pH are as such well known to the person skilled in the art and can be achieved by for example the addition of a base such as sodium hydroxide or an acid such as sulphuric acid or by means of a buffer such as a citrate buffer.

As used herein, the pH of solid materials like starch and/or flour is determined at 21°C and as follows: 10 g of dry test material to be measured is added to a beaker containing 100 ml of demineralised water, followed by stirring. The pH of the suspension is then measured by using a standard pH measuring device which has been calibrated. The pH as measured is deemed to be the pH of the test material.

The pH of the -aqueous- starch composition according to the invention is preferably at least 2.0 in order to prevent that glycosidic bonds between the saccharide moieties of the starch are hydrolysed, a process which is known to occur at an accelerated pace at pH values below 2.0. More preferably the pH of the -aqueous- starch composition is at least 2.5, 3.0, 3.5, or even at least 4.0.

The pH of the -aqueous- starch composition according to the invention should be at most 7.9 as it was found that a beneficial effect on the properties of the pregelatinized starch and/or pregelatinized flour occurs when the pH of the - aqueous- starch composition was below 7.9. In a preferred embodiment, the pH of the starch composition is between 4.0 and 7.5, more preferably between 4.0 and 6.5. It has been found that by controlling the pH of the starch composition to be lower than 7.5, preferably lower than 6.5, the shear stability of the pregelatinized starch and/or pregelatinized flour can be further maintained or even enhanced. More preferably the pH of the -aqueous- starch composition is at most 7.2, 7.1, 7.0, 6.9, 6.8, 6.7, 6.6, 6.5, 6.4, 6.3, 6.2, 6.1, or even at most 6.0.

In an embodiment, the starch and/or flour is heated in the pregelatinizing step by the application of steam to the drum dryer. The advantage is a controlled heating of the -aqueous - starch composition on the drum dryer.

In an embodiment, the pregelatinizing step is performed such that the pregelatinized starch and/or pregelatinized flour has a moisture content lying between 0 wt.% and 30 wt.%, preferably between 2 wt.% and 20 wt.%, more preferably between 6 and 15 wt.%, most preferably between 10 and 14 wt.%. The pregelatinizing step is performed using a drum dryer. Conditions of the pregelatinizing step using the drum dryer can be suitably selected to dry the pregelatinized starch and/or pregelatinized flour.

In an embodiment, the resulting pregelatinized starch and/or flour is characterized by a tan δ value of at most 0.99, wherein said tan δ value is measured on a gel with pH 3.6 obtained from said starch and/or flour, that was subjected to consecutive mixing steps at room temperature of 8 minutes at 1200 rpm, 5 minutes at 900 rpm, 5 minutes at 300 rpm and 1 minute at 5000 rpm, wherein said tan δ is measured using an amplitude sweep at deformation from 0.01% to 1000% at frequency 1 Hz. It has been understood by the inventors that the tan δ value (loss tangent) as measured after the high shear condition is a critical measure for the high shear stability of the pregelatinized starch and/or flour. The tan δ provides a ratio between elastic properties and viscous properties of the starch. With a tan δ of 1, the elastic and viscous properties are equal. The smaller the loss tangent, the more elastic the starch material.

In a particularly preferred embodiment, the pregelatinized starch is rice starch, and even more preferred thermally inhibited rice starch. This material is characterized in that said gel has a shear-dependent viscosity (V₅) of at least 10,000 mPa.s measured at 20 °C and shear rate of 0.88 s-1 after applying to said gel consecutive mixing steps at room temperature of 8 minutes at 1200 rpm, 5 minutes at 900 rpm and 5 minutes at 300 rpm, and a shear rate application step during 1 minute at 5000 rpm. It has been found that the shear-dependent viscosity (V₅) of at least 10,000 mPa.s is a beneficial property for the use of the pregelatinized rice starch in food production.

In an embodiment of the pregelatinized rice starch and/or pregelatinized rice flour, said gel has a tan δ value of at most 0.30 and a shear-dependent viscosity (V₅) of at least 11,000 mPas.

In a preferred embodiment of the pregelatinized rice starch and/or pregelatinized rice flour, the pregelatinized rice starch and/or pregelatinized rice flour is obtainable according to the process according to the invention.

In another aspect of the invention there is provided a pregelatinized rice starch and/or pregelatinized rice flour, wherein the pregelatinized rice starch and/or pregelatinized rice flour is thermally inhibited, characterized by a reduction of a tan δ value of at most 20%, preferably a reduction of a tan δ value of at most 10%, of the pregelatinized rice starch and/or pregelatinized rice flour compared to the same thermally inhibited starch and /or flour which has not been pregelatinized, wherein said tan δ value is measured on a gel with pH 3.6 obtained from said starch and/or flour, that was subjected to consecutive mixing steps at room temperature of 8 minutes at 1200 rpm, 5 minutes at 900 rpm and 5 minutes at 300 rpm, and a shear rate application step during 1 minute at 5000 rpm, wherein said tan δ is measured using an amplitude sweep at deformation from 0.01% to 1000% at frequency 1 Hz.

As used herein, the terms 'essentially', 'consist(ing) essentially of, 'essentially all' and equivalents thereof have, unless noted otherwise, in relation to a composition or a process step the usual meaning that deviations in the composition or process step may occur, but only to such an extent that the essential characteristics and effects of the composition or process step are not materially affected by such deviations.

The starch and/or flour may constitute the entirety of any solid materials as used in the mixing step, or it may be present in the form of a mixture with other compounds. In case of a mixture, the starch and/or flour is the largest dry matter constituent in the mixture, preferably representing at least 40, 50, 60, 70, 80, 90, or at least 95% of the mixture entering the mixing step. Examples of possible other compounds in the mixture are: other carbohydrates, proteins, and lipids.

Upon completion of the pregelatinization step, the pregelatinized starch and/or pregelatinized flour is typically recovered and processed further, for example by packaging the pregelatinized starch and/or pregelatinized flour.

The industrial implementation of the process of the invention can be in the form of a batch process, in the form of a continuous process, or in a mixed form thereof.

### Examples

### Preparation of a gel

Certain properties of the starch or flour were determined by preparing a gel with the starch or flour. The experiments shown in Comparative Experiment A and B and Examples 1 and 2 are performed using a thermally inhibited rice starch.

The gel was prepared in a Stephan UMSK 5 cooker equipped with a mixing insert having two rounded blades, using 135 g (dry matter) starch, citric acid and trisodium citrate to acidify and buffer to pH 3.6, and sufficient water to obtain a total weight of 2,500 g, whereby the citric acid and trisodium citrate were combined with the water before the starch was added.

The mixing conditions for preparing the gel are selected depending on the type of starch or flour.

A gel of a non-pregelatinized thermally inhibited rice starch was prepared by heating the starch composition during 4.5 minutes at 94°C via indirect heating of the double jacket of the Stephan UMSK 5 cooker at a steam pressure of 0.6 bar, while simultaneously mixing at 300 rpm. The measurements were taken after cooling to 25°C and - except for the comparative of a native starch, after applying an intensive shearing step on the gel - the intensity of which depends on the degree of inhibition - by means of a Silverson L4RT mixer using a square hole (2.4 mm) high shear screen mixer head during 1 minute.

A gel of a pregelatinized starch was subjecting the mixture to 3 consecutive mixing steps at room temperature of 8 min at 1200rpm, 5 min at 900rpm and 5 min at 300rpm.

Thereafter, 500mL portion of the gel was subjected to an intensive shearing step by means of a Silverson L4RT mixer using a square hole (2.4 mm) high shear screenmixer head during 1 min at the specified shearing rate (rpm).

The selection of rpm for the intensive shearing step is done based a.o. on the nature of the gel; thus, in further examples hereinbelow it may be that another rpm is chosen in order to obtain the most meaningful insight into material behaviour. The rpm as used for the intensive shearing step - always during one minute - will be reflected in the notation of viscosity parameter V by means of a subscript, whereby V₀ indicates no intensive shearing step (i.e. rpm is 0), V_{1.5} indicates an rpm of 1,500, V₃ indicates an rpm of 3,000, V₅ indicates an rpm of 5,000, etc.

### Measurement of viscosity properties

The viscosity and tan δ of a gel, made from the starch concerned, that had first been subjected to an intensive shear step, were determined at a temperature of 20°C by means of an Anton Paar Rheometer (parallel plate-plate configuration; the plate diameter was 40 mm). As meant herein, the term tan δ is used in its common meaning of being a loss tangent in the linear viscoelastic region. It gives a ratio between viscous and elastic properties of a system, showing which one is the dominant one. With a tan δ value of 1, the elastic and viscous properties of the material are equal. The smaller the loss tangent is, the more elastic is the material. The viscosity at 0.88 s⁻¹ was determined in a viscosity curve measurement wherein the shear rate varied from 0.1 to 100 s⁻¹ according to a logarithmic ramp with 20 measuring points.

The tan δ was determined from the LVR range obtained via an amplitude sweep measurement having the following characteristics: deformation from 0.01 to 1000% according to a logarithmic ramp with 6 measuring points per decade.

In the Examples and Comparative Experiments herein, the tan δ and viscosity are always determined on a gel that has first been subjected to shear forces as described above, at the rpm as indicated per Example or Comparative Experiment.

### Comparative Experiment A

The properties of the thermally inhibited waxy rice starch as such, which was the raw material as used in Comparative Experiment B and Examples 1 - 2 hereinbelow, were measured without the starch having been subjected to any subsequent process step, such as slurrying.

The starch had 7.0 wt.% moisture content. The starch had a pH of 8.3 (determined on a 10 wt.% solution of the starch in demineralised water). The viscosity properties were determined to be:

| | |
|---|---|
| V₅ | 14,500 mPa.s |
| tan δ | 0.29 |

### Comparative Experiment B

A sample of the thermally inhibited waxy rice starch as was used in Comparative Experiment A was used to form a slurry, using demineralized water as aqueous medium. The resulting slurry contained 30 wt.% particles of thermally inhibited waxy rice starch expressed as percentage of dry matter of the thermally inhibited waxy rice starch based on total weight of the slurry. The slurry had a pH of 8.0. The slurry was subsequently de-watered on a drum dryer (single drum-dryer of Andritz, type E5/5) using conditions of 5.5 bar of steam and 5 rpm to form a slurried-dried starch having 4.4 wt.% moisture content.

The slurried-dried starch had a pH of 8.3 (determined on a 10 wt.% solution of the starch in demineralised water).

The viscosity properties were determined to be:

| | |
|---|---|
| V₅ | 9,750 mPa.s |
| tan δ₅ | 0.36 |

### Example 1

A sample of the thermally inhibited waxy rice starch as was used in Comparative Experiment A was used to form a starch composition, using demineralized water acidified with sulfuric acid prior to contact with rice starch to pH 2.5 as aqueous medium. The resulting starch composition had a pH of 7.3 and contained 30 wt.% particles of thermally inhibited waxy rice starch expressed as percentage of dry matter of the thermally inhibited waxy rice starch based on total weight of the starch composition.

The starch composition was subsequently dried on a drum dryer using conditions of 5.5 bar of steam and 5 rpm to form a pregelatinized starch having 4.6 wt.% moisture content.

The pregelatinized starch had a pH of 7.7 (determined on a 10 wt.% solution of the starch in demineralised water).

The viscosity properties were determined to be:

| | |
|---|---|
| V₅ | 11,900 mPa.s |
| tan δ₅ | 0.28 |

### Example 2

A sample of the thermally inhibited waxy rice starch as was used in Comparative Experiment A was used to form a starch composition, using demineralized water which was acidified with sulfuric acid prior to contact with rice starch to pH 2.1 as aqueous medium. The resulting starch composition had a pH of 6.2 and contained 30 wt.% particles of thermally inhibited waxy rice starch expressed as percentage of dry matter of the thermally inhibited waxy rice starch based on total weight of the slurry.

The starch composition was subsequently dried on a drum dryer using conditions of 5.5 bar of steam and 5 rpm to form a pregelatinized starch having 5.0 wt.% moisture content.

The pregelatinized starch had a pH of 6.5 (determined on a 10 wt.% solution of the starch in demineralised water).

The viscosity properties were determined to be:

| | |
|---|---|
| V₅ | 12,300 mPa.s |
| tan δ₅ | 0.28 |

The results V₅ and tan δ₅ show that the shear stability of Example 1 and Example 2, which have a pH of starch composition lower than 7.9, was considerably higher than for Comparative Example B.

Whilst the principles of the invention have been set out above in connection with specific embodiments, it is to be understood that this description is merely made by way of example and not as a limitation of the scope of protection which is determined by the appended claims.

## Claims

1. Process for the preparation of pregelatinized starch and/or pregelatinized flour, comprising the steps of:
• Providing an aqueous medium having a pH in the range of -1.0 to 7.5, preferably 1.0 - 5.0;
• Mixing starch and/or flour with the aqueous medium in a mixing step to form a starch composition having a pH in the range of 2.0 to 7.9, preferably between 4.0 and 7.5, more preferably between 4.0 and 6.5, wherein the starch composition has the aqueous medium as continuous phase and contains between 20 and 60 wt.%, preferably between 30 and 50 wt.%, expressed as percentage of dry matter on total weight of the starch composition, of particles of starch and/or flour; and
• Pregelatinizing the starch composition in a pregelatinization step, wherein said composition is heated using a drum dryer to form the pregelatinized starch and/or pregelatinized flour; wherein during the pregelatinization step the starch composition is dried using the drum dryer.

2. Process according to claim 1, wherein the process comprises a physical modification step prior to the mixing step wherein the starch and/or flour are physically modified and wherein the starch and/or flour used in the mixing step is the physically modified starch and/or flour.

3. Process according to claim 2, wherein the physical modification step is a thermal inhibition step and wherein the starch and/or flour used in the mixing step is the thermally inhibited starch and / or thermally inhibited flour.

4. Process according to any one of the preceding claims, wherein the starch and/or flour is derived from a waxy starch and/or waxy flour.

5. Process according to any one of the preceding claims, wherein the starch and/or flour is derived from rice, preferably a waxy rice.

6. Process according to any one of preceding claims, wherein the pregelatinizing step is performed such that the pregelatinized starch and/or pregelatinized flour has a moisture content lying between 0 wt.% and 30 wt.%, preferably between 2 wt.% and 20 wt.%, more preferably between 6 and 15 wt.%, most preferably between 10 and 14 wt.%.

7. Process according to any one of preceding claims, wherein:
• the pH of the aqueous medium is between -1.0 and 10.0;
• in the mixing step, the pH of the starch composition is brought to a value between 3.0 and 7.0 or to a value between 4.0 and 6.7 within 90 minutes, preferably within 15 minutes, more preferably within 10 minutes after the mixing of the starch and/or flour with the aqueous medium.

8. Process according to any of the preceding claims, wherein the resulting pregelatinized starch and/or flour is **characterized by** a tan δ value of at most 0.99, wherein said tan δ value is measured on a gel with pH 3.6 obtained from said starch and/or flour, that was subjected to consecutive mixing steps at room temperature of 8 minutes at 1200 rpm, 5 minutes at 900 rpm, 5 minutes at 300 rpm and 1 minute at 5000 rpm, wherein said tan δ is measured using an amplitude sweep at deformation from 0.01% to 1000% at frequency 1 Hz.

9. Physically modified - preferably thermally inhibited - and pregelatinized starch and/or flour obtainable according to the process according to any one of claims 2 - 8.

10. Physically modified - preferably thermally inhibited - and pregelatinized starch as claimed in claim 9, wherein the starch is or flour is a rice starch or rice flour, preferably a waxy rice starch.

11. Pregelatinized rice starch and/or pregelatinized rice flour, preferably according to claim 9-10, wherein the pregelatinized rice starch and/or pregelatinized rice flour is physically modified, **characterized by** a tan δ value of at most 0.99, wherein said tan δ value is measured on a gel with pH 3.6 obtained from said starch and/or flour, that was subjected to consecutive mixing steps at room temperature of 8 minutes at 1200 rpm, 5 minutes at 900 rpm and 5 minutes at 300 rpm, and a shear rate application step during 1 minute at 5000 rpm, wherein said tan δ is measured using an amplitude sweep at deformation from 0.01% to 1000% at frequency 1 Hz.

12. Pregelatinized rice starch as claimed in claim 11, wherein said gel has a shear-dependent viscosity (v5) of at least 10,000 mPa.s measured at 20 °C and shear rate of 0.88 s⁻¹ after applying consecutive mixing steps to said gel at room temperature of 8 minutes at 1200 rpm, 5 minutes at 900 rpm and 5 minutes at 300 rpm, and a shear rate application step during 1 minute at 5000 rpm.

13. Pregelatinized rice starch as claimed in claim 12, said gel has a tan δ value of at most 0.30 and a shear-dependent viscosity (v5) of at least 11,000 mPa.s.
